# DEMANDE DE BREVET EUROPEEN

(11) **EP 3 133 707 A1**
(43) Date de publication de la demande: **22.02.2017**
(21) Numéro de dépôt: 15290212.8
(22) Date de dépôt: 20.08.2015
(51) Int. Cl.: H02G 5/06, H02B 13/045, H01B 9/06

(54) **APPAREILLAGE DE CONNEXION ÉLECTRIQUE ENCAPSULÉ**

(71) Demandeur: Siemens Aktiengesellschaft, 80333 München (DE)
(72) Inventeur: Faure, Sébastian, 38450 Vif (FR); Serillon, David, 38250 St. Nizier Moucherotte (FR)
(74) Mandataire: Maier, Daniel Oliver

(57) **Abrégé**

La présente invention concerne un appareillage de connexion électrique (1) adapté aux moyennes et hautes tensions comprenant :
- une enveloppe (13) définissant une chambre isolante comprenant un milieu isolant (14) ;
- des composants électriques encapsulés dans ladite chambre isolante;
caractérisé en ce qu'une section de ladite enveloppe (13) a une forme polylobée.

## Description

La présente invention concerne un appareillage de connexion électrique haute tension de type blindé, communément désigné par l'appellation GIS pour « Gas Insulated Switchgear », selon le préambule de la revendication 1.

Les appareillages électriques de type GIS comprennent une enveloppe métallique cylindrique dans laquelle sont encapsulés des conducteurs électriques en forme de tige, ladite enveloppe étant reliée à la terre et servant de blindage électrique afin d'éviter tout contact accidentel avec lesdits conducteurs électriques sous tension. Ladite enveloppe métallique définit ainsi une chambre isolante comprenant un milieu isolant et dans laquelle sont disposés lesdits conducteurs électriques. Le milieu isolant est généralement un gaz inerte présentant une forte rigidité diélectrique et une bonne stabilité à l'arc électrique, par exemple l'hexafluorure de soufre SF₆. Lesdits conducteurs électriques permettent quant à eux de couper ou alimenter en énergie électrique des réseaux électriques à haute tension. Un tel appareillage électrique est par exemple décrit dans la demande de brevet WO 2014/037566 A1.

Une problématique liée à ces appareillages électriques est justement l'utilisation de milieux isolants coûteux et présentant un potentiel de réchauffement global (Global Warming Potential) les plaçant parmi les gaz à fort pouvoir d'effet de serre. Afin de remédier à cette problématique, il a été proposé de réduire la pression de ladite chambre, ou de substituer totalement ou partiellement lesdits milieux isolants par d'autres milieux isolants, moins néfastes pour l'environnement, mais gardant des propriétés diélectriques et de stabilité à l'arc électrique adaptées aux hautes tensions desdits composants électriques. Une telle solution est par exemple illustrée dans la demande de brevet WO 2010/142346 A1.

Pouvoir limiter la quantité de milieu isolant mise en oeuvre dans des appareillages électriques de type GIS reste ainsi un enjeu crucial pour l'avenir. Un but de la présente invention est ainsi de proposer un appareillage électrique de type GIS permettant de limiter la quantité de milieu isolant mise en oeuvre, tout en maintenant un coût de fabrication et d'utilisation dudit appareillage électrique aussi bas que possible.

L'invention propose ainsi un appareillage de connexion électrique haute tension sous enveloppe métallique selon la revendication 1 permettant de résoudre la problématique précédemment exposée. Un ensemble de sous-revendications présente également des avantages de l'invention.

L'invention concerne ainsi un appareillage de connexion électrique adapté aux moyennes et hautes tensions comprenant
- une enveloppe ou boitier définissant une chambre isolante destinée à comprendre un milieu isolant. En particulier la chambre isolante comprend un milieu isolant, par exemple l'hexafluorure de soufre SF₆; et
- des composants électriques encapsulés dans ladite chambre isolante, ou autrement dit, disposés dans ladite chambre isolante ;
caractérisé en ce qu'une section de ladite enveloppe a une forme polylobée (i.e. est formée de plusieurs segments convexes définissant une suite de lobes, ou chaque lobe fait référence notamment à une portion de lobe ou de cercle).

En particulier, ledit appareillage de connexion électrique comprend une première extrémité et une seconde extrémité, adaptée chacune à la connexion avec un autre dispositif électrique, ladite première extrémité étant par exemple configurée pour connecter électriquement ledit appareillage de connexion électrique à un premier dispositif électrique et ladite seconde extrémité étant configurée pour connecter électriquement ledit appareillage de connexion électrique à un second dispositif électrique. Préférentiellement, ladite enveloppe s'étend de ladite première extrémité à ladite seconde extrémité, et au moins une portion de ladite enveloppe entre ladite première extrémité et ladite seconde extrémité est caractérisée par une section constante selon ladite forme polylobée. Selon un autre mode de réalisation, ladite enveloppe est caractérisée par une section constante de forme polylobée de ladite première extrémité à ladite seconde extrémité, ladite section de ladite enveloppe étant ainsi constamment de forme polylobée entre ladite première extrémité et ladite seconde extrémité. Préférentiellement, uniquement la partie intérieure de ladite section, i.e. la partie de ladite section apte à définir les parois internes définissant les frontières de ladite chambre isolante, est de forme polylobée. En particulier, ladite section est une section transverse, i.e. comprise dans un plan perpendiculaire à la droite ou courbe reliant un point disposé substantiellement au centre de la première extrémité à un point disposé substantiellement au centre de la seconde extrémité. Ledit plan transverse est par exemple un plan coupant perpendiculairement un axe longitudinal dudit appareillage de connexion électrique, ou en particulier, de ladite enveloppe, ledit axe longitudinal reliant par exemple ladite première et ladite seconde extrémité.

Préférentiellement, ladite forme polylobée comprend une succession de portions de lobes ou de portions de cercles, lesdites portions de lobes ou de cercles étant soit directement jointes les unes aux autres, soit indirectement jointes les unes aux autres par un segment de droite ou un segment courbe concave (par opposition à la forme convexe de la portion de lobe ou de cercle). Dans ce qui suit, nous désignerons par le terme générique « lobe » de la forme polylobée une portion de lobe ou une portion de cercle. Préférentiellement, ladite section de forme polylobée de ladite enveloppe est caractérisée en ce que chaque lobe de ladite forme polylobée comprend un axe de symétrie passant par le composant électrique le plus proche dudit lobe. De cette façon, chaque composant électrique encapsulé dans ladite enveloppe est au moins partiellement entouré par un lobe, la distance séparant ledit lobe dudit composant électrique étant optimisée pour minimiser d'une part le volume du milieu isolant enfermé dans ladite enveloppe et d'autre part des champs électriques susceptibles d'être générés dans la chambre isolante. Préférentiellement, lesdits composants électriques sont des conducteurs électriques conduisant chacun une phase d'un courant électrique, par exemple de la première extrémité à la seconde extrémité, et ladite forme polylobée comprend un nombre de lobes égale au nombre de conducteurs encapsulés dans ladite enveloppe.

Préférentiellement, ladite enveloppe dudit appareillage de connexion électrique est en forme de barre, par exemple une barre métallique creuse, reliant la première extrémité à la seconde extrémité, et dont au moins une section comprend ladite forme polylobée, mais préférentiellement, ladite enveloppe est de section constante, ladite section constante comprenant ladite forme polylobée. Selon la présente invention, ladite enveloppe en forme de barre encapsule des composants électriques aptes à conduire un courant, chacun des composants électriques étant préférentiellement un conducteur électrique en forme de tige s'étendant de la première extrémité à la seconde extrémité. Préférentiellement, ledit appareillage de connexion électrique est un appareillage de connexion électrique triphasé comprenant trois conducteurs électriques en forme de tige arrangés selon un schéma triangulaire dans ladite chambre isolante, formant ainsi les arêtes parallèles d'un prisme triangulaire, par exemple d'un prisme triangulaire droit semi-régulier s'étendant de la première extrémité à la seconde extrémité. Préférentiellement, chaque arête est alors entourée par un lobe de ladite forme polylobée de ladite section de l'enveloppe.

Afin de mieux comprendre la présente invention, un exemple de réalisation et d'application est fourni à l'aide des figures suivantes:
Figure 1 : vue 3D d'un appareillage de connexion électrique selon l'invention.
Figure 2 : vue d'une section de forme polylobée d'un appareillage de connexion électrique selon l'invention.

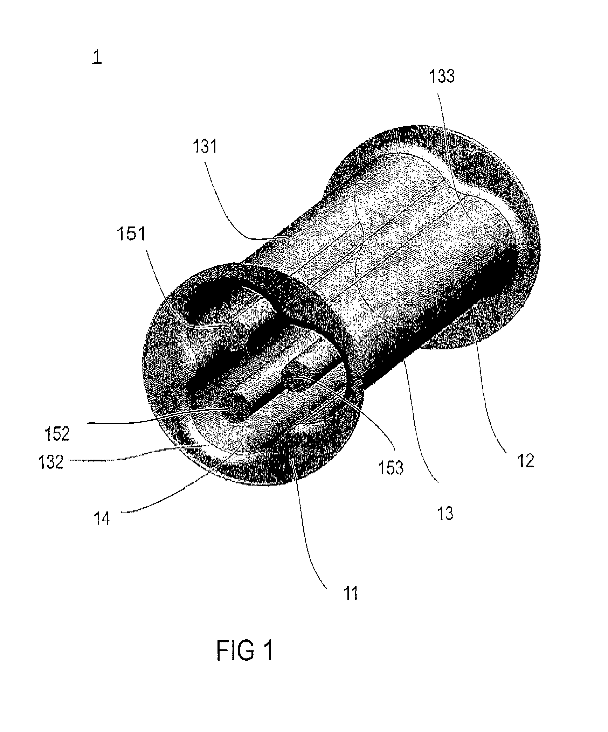

La figure 1 présente un mode de réalisation préféré d'un appareillage de connexion électrique 1 selon l'invention. Ce dernier comprend notamment une première extrémité 11, une seconde extrémité 12, une enveloppe 13 s'étendant de la première extrémité 11 à la seconde extrémité 12 et apte à définir une chambre isolante hermétique entre ladite première extrémité 11 et ladite seconde extrémité 12, par exemple par connexion de la première extrémité 11 à un premier dispositif électrique et connexion de la seconde extrémité 12 à un second dispositif électrique, ledit premier et second dispositif électrique étant configurés pour fermer respectivement ladite première et seconde extrémité de façon à rendre ladite chambre isolante hermétique, ladite enveloppe 13 définissant ainsi en particulier au moins des parois internes de ladite chambre isolante, ladite chambre isolante étant destinée à enfermer un milieu isolant 14, comme par exemple un fluide ou un gaz tel que l'hexafluorure de soufre SF₆ ou un mélange d'hexafluorure de soufre SF₆ et d'azote N₂. Ledit appareillage de connexion électrique 1 comprend en outre des composants électriques, par exemple des conducteurs 151, 152, 153 préférentiellement sous forme de tige, installés à l'intérieur de ladite enveloppe 13, s'étendant de la première extrémité 11 à la seconde extrémité 12, libres de contacts avec les parois internes de ladite enveloppe, et étant isolés des parois internes de ladite enveloppe 13 par ledit milieu isolant 14 (lesdites parois internes de ladite enveloppe 13 définissant précisément la géométrie de ladite chambre isolante). Lesdits conducteurs 151, 152, 153 s'étendent notamment parallèlement les uns aux autres de la première extrémité 11 à la seconde extrémité 12, par exemple de façon à former les arêtes d'un prisme triangulaire droit, notamment semi-régulier, dont les bases se trouvent respectivement confondues avec la première et la seconde extrémité, lesdits conducteurs étant ainsi également parallèles aux parois internes de ladite enveloppe 13.

Selon le mode de réalisation préféré de la figure 1, l'appareillage de connexion électrique 1 est un appareillage électrique triphasé, par exemple une gaine à barre (busduct) ou un jeu de barres (busbar), comprenant trois conducteurs 151, 152, 153, chacun conduisant une phase d'un courant destiné à traverser ledit appareillage de connexion électrique 1 de sa première extrémité 11 à sa seconde extrémité 12 en suivant le chemin définit par lesdits conducteurs. Lesdits composants électriques s'étendent ainsi préférentiellement de ladite première extrémité 11 à ladite seconde extrémité 12 parallèlement aux parois internes de ladite enveloppe et libres de contact avec cette dernière, afin d'acheminer ledit courant d'une extrémité à l'autre dudit appareillage de connexion électrique tout en garantissant et en permettant le maintien d'une haute tension, chacune desdites extrémités 11, 12 étant notamment destinée à être connectée à un autre dispositif électrique.

L'enveloppe 13 selon l'invention forme ainsi le corps dudit appareillage de connexion électrique 1 dans lequel sont renfermés lesdits composants électrique, et est fermée d'un côté par ladite première extrémité 11 qui forme une face frontale avant de ladite enveloppe 13, et de l'autre côté par ladite seconde extrémité 12 qui forme ainsi une face frontale arrière de ladite enveloppe, ladite première extrémité 11 et ladite seconde extrémité 12 étant en particulier équipées de moyens de connexion adaptés à la connexion dudit appareillage de connexion électrique à chacun desdits autres dispositifs électriques. Préférentiellement, ladite enveloppe a une forme de barre, par exemple une barre creuse, substantiellement cylindrique ou pouvant en particulier au moins s'inscrire dans un cylindre creux.

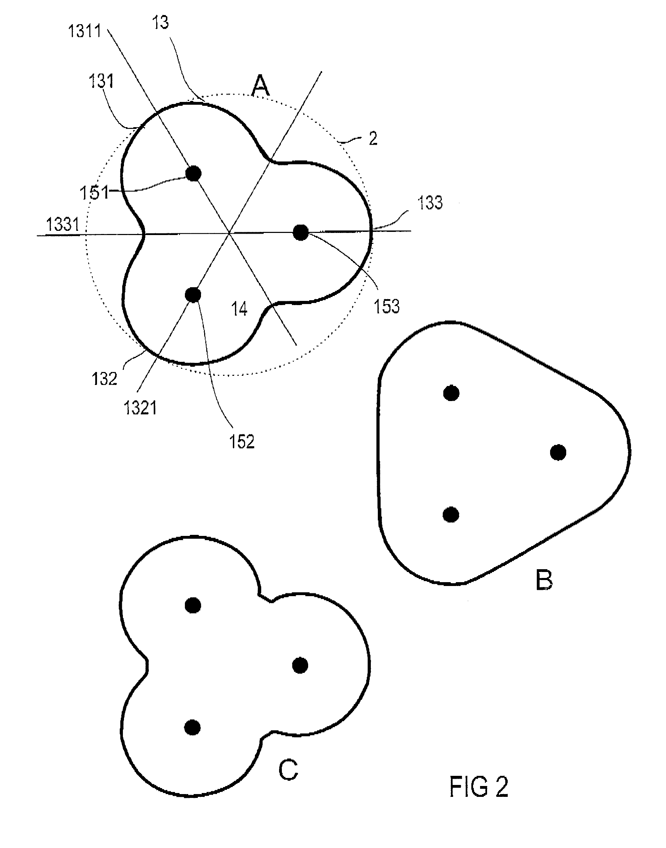

Des modes de réalisation préférés de sections de ladite enveloppe sont illustrés en Fig. 2. En effet, selon la présente invention, ladite enveloppe 13 est caractérisée par une section comprenant une forme polylobée, en particulier par une section transverse constante dont la partie interne, i.e. la partie définissant lesdites parois aptes à enfermer le milieu isolant 14, est de forme polylobée, et définit ainsi une chambre isolante comprenant de multiples lobes lorsqu'une coupe transversale dudit appareillage de connexion électrique est observée, entre ladite première extrémité et ladite seconde extrémité. La section est dite transverse, car prise perpendiculaire à la longueur de l'enveloppe en forme de barre, i.e. parallèlement à la face frontale avant ou arrière. Les parois internes de ladite enveloppe 13 sont ainsi formées de surfaces convexes, jointes les unes aux autres, de manière à définir une section dont la forme intérieure est polylobée comme illustré dans les figures 2A-2C.
Selon le mode de réalisation préféré de la figure 1, la forme polylobée comprend trois lobes 131, 132, 133, chacun entourant un desdits conducteurs 151, 152, 153. Chaque lobe a préférentiellement une forme symétrique caractérisé par un axe de symétrie 1311, 1321, 1331 passant par le conducteur qu'il entoure, i.e. le conducteur le plus proche dudit lobe. Avantageusement, le volume du milieu isolant 14 enfermé à l'intérieur de ladite enveloppe 13 se trouve ainsi réduit comparé aux appareillages électriques classiques de section circulaire (cf. Fig. 2A, où une section circulaire classique 2 est représentée en trait-tiré à des fins de comparaison).

En particulier, ladite section polylobée est formée par des portions de cercle, le nombre de portions de cercle étant équivalent au nombre de composants électriques, par exemple au nombre de conducteurs tel que présenté dans les Fig. 2A-2C. En particulier, chaque portion de cercle définit un arc de cercle d'un secteur circulaire ayant pour centre un desdits composants électriques, dont le rayon permet d'éviter que ledit composant électrique interagisse électriquement avec ladite paroi interne de l'enveloppe, et l'angle dudit secteur circulaire étant configuré pour diminuer toute interaction électrique des extrémités dudit arc de cercle avec les autres composants électriques. Préférentiellement, chacune des extrémités de chaque arc de cercle est reliée à l'extrémité de l'arc de cercle directement adjacent par un segment courbe concave comme illustré en Fig. 2A, ou par un segment de droite, par exemple tangent audit arc de cercle en son extrémité comme illustré en Fig. 2B, ou décrivant un angle inférieur à *π* [rad] avec la tangente audit arc de cercle à son extrémité, comme illustré par exemple en Fig. 2C.

Pour résumé, la présente invention concerne un appareillage de connexion électrique adapté à la transmission des moyennes et hautes tensions, comprenant une enveloppe dont la section n'est pas circulaire comme classiquement connu, mais polylobée, permettant d'une part une diminution du volume du milieu isolant compris dans ladite enveloppe, mais également et d'autre part, une diminution de la circonférence de ladite section comparé à une section circulaire classique, permettant ainsi de diminuer également le poids dudit appareillage de connexion électrique et la quantité de matière nécessaire à sa construction, tout ceci pour un niveau d'isolement des conducteurs identique.

## Revendications

1. Appareillage de connexion électrique (1) adapté aux moyennes et hautes tensions comprenant :
- une enveloppe (13) définissant une chambre isolante destinée à comprendre un milieu isolant (14) ;
- des composants électriques encapsulés dans ladite chambre isolante;
**caractérisé en ce qu'**une section de ladite enveloppe (13) a une forme polylobée.

2. Appareillage de connexion électrique (1) selon revendication 1 comprenant une première extrémité (11) et une seconde extrémité (12) adaptée chacune à la connexion électrique avec un autre dispositif électrique, ladite enveloppe (13) s'étendant de ladite première extrémité (11) à ladite seconde extrémité (12), et au moins une portion de ladite enveloppe (13) entre ladite première extrémité (11) et ladite seconde extrémité (12) est **caractérisée par** une section constante ayant ladite forme polylobée.

3. Appareillage de connexion électrique (1) selon la revendication 2 pour lequel ladite enveloppe a une forme de barre allongée creuse s'étendant de ladite première extrémité (11) à ladite seconde extrémité (12), et ladite section comprenant une forme polylobée est une section transverse.

4. Appareillage de connexion électrique (1) selon une des revendications 2 ou 3 pour lequel ladite enveloppe (13) est **caractérisée par** une section constante ayant ladite forme polylobée de ladite première extrémité (11) à ladite seconde extrémité (12).

5. Appareillage de connexion électrique (1) selon une des revendications 1 à 4 pour lequel ladite forme polylobée comprend une succession de portions de lobes.

6. Appareillage de connexion électrique (1) selon une des revendications 1 à 5 pour lequel chaque lobe de ladite forme polylobée comprend un axe de symétrie passant par le composant électrique le plus proche dudit lobe.

7. Appareillage de connexion électrique (1) selon une des revendications 1 à 6 pour lequel lesdits composants électriques sont des conducteurs électriques (151, 152, 153) conduisant chacun une phase d'un courant électrique entre la première extrémité (11) et la seconde extrémité (12).

8. Appareillage de connexion électrique (1) selon revendication 7 pour lequel le nombre de lobes égale le nombre de conducteurs électriques (151, 152, 153).
